# EUROPEAN PATENT APPLICATION

(11) **EP 2 518 732 A1**
(43) Date of publication of application: **31.10.2012**
(21) Application number: 12165793.6
(22) Date of filing: 26.04.2012
(51) Int. Cl.: G21C 9/06

(54) **Nuclear power plant and method of operating it**

(30) Priority: 28.04.2011 JP 2011100837
(71) Applicant: Hitachi-GE Nuclear Energy, Ltd., Hitachi-shi Ibaraki 317-0073 (JP)
(72) Inventor: Wada, Yoichi, Tokyo 100-8220 (JP); Ohtsuka, Masaya, Tokyo 100-8220 (JP); Nishikawa, Hideaki, Tokyo 100-8220 (JP)
(74) Representative: MERH-IP Matias Erny Reichl Hoffmann

(57) **Abstract**

A hydrogen treatment facility for treating hydrogen without using a power source is disposed outside a reactor containment vessel (109) and in a upper portion of a reactor building. A hydrogen detector (129) detecting hydrogen in the reactor building is connected to a control apparatus operated by an independent power source activated at the time of station black-out. A circulation passage for air circulation generated in the reactor building is disposed in the reactor building and outside the reactor containment vessel (109). A hydrogen treatment duct (128a, b, c) connects to the circulation passage and both of a gangway (130) and a room disposing an equipment. When a severe accident and a station black-out and when hydrogen concentration detected by the hydrogen detection apparatus exceeds a set concentration, the hydrogen treatment duct (128a, b, c) is put in use by the control apparatus. Air containing the hydrogen is introduced into the hydrogen treatment facilities through the hydrogen treatment duct (128a, b, c) and the circulation passage.

## Description

### BACKGROUND OF THE INVENTION

### [Technical Field]

The present invention relates to a nuclear power plant and a method of operating it and, in particular, to a nuclear power plant and a method of operating it in consideration of safety during station black-out (SBO), in which all power sources including external and emergency power sources are lost, caused by disaster or the like.

### [Background Art]

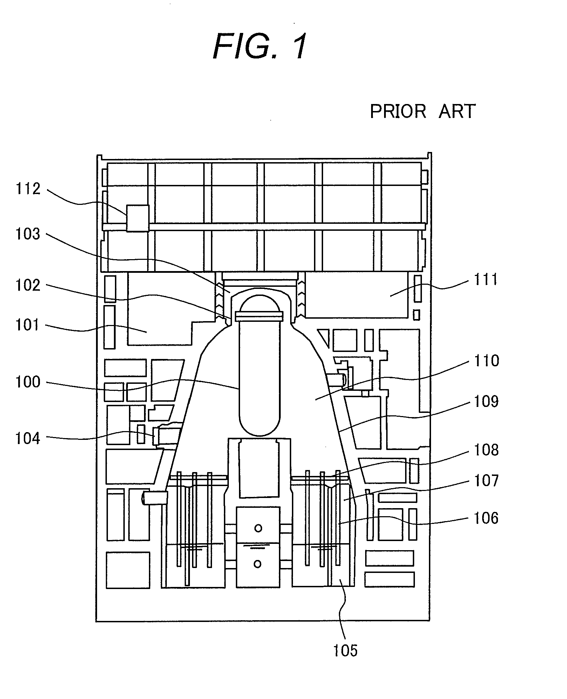

First of all, a structure of a nuclear power plant will be described with reference to FIG. 1.

As shown in FIG. 1, a reactor pressure vessel 100 is installed in a reactor containment vessel 109. An interior of the reactor containment vessel 109 is divided into a dry well 110 in an upper portion and a suppression chamber 107 in a lower portion by a diaphragm floor 108. The dry well 110 and the suppression chamber 107 are communicated by vent tubes 106. Each lower end of the vent tubes 106 is disposed in a suppression pool 105 having cooling water. The interior and the exterior of the reactor containment vessel 109 are communicated through a door such as an equipment hatch 104. In a reactor building, facilities such as a spent fuel pool 101 and a steam dryer/separator pit 111 are disposed above the reactor containment vessel 109, and a reactor well 103 is disposed between the spent fuel pool 101 and the steam dryer/separator pit 111 in exterior of the reactor containment vessel 109. A top flange 102 is attached to an upper end portion of the reactor containment vessel 109 and the upper end portion of the reactor containment vessel 109 can be opened by detaching the top flange 102 from the upper end portion of the reactor containment vessel 109. In addition, a crane 112 is provided in the upper space of the reactor building.

When a severe accident in which cooling of fuel assemblies loaded in a reactor core (hereinafter, referred to as a core) is stopped occurs, steam is continuously generated in the reactor pressure vessel 100, increasing the internal pressure of the reactor pressure vessel 100. Additionally, when the steam generation continues, a water level in the reactor pressure vessel 100 is lowered and each upper portion of the fuel assemblies is gradually exposed above the water level. Consequently, zirconium alloy making up a fuel cladding of the fuel assembly reacts with water to form hydrogen. Furthermore, when the pressure inside the reactor pressure vessel 100 is increased, the steam inside the reactor pressure vessel 100 is discharged along with the hydrogen to the suppression pool 105 through the vent tube 106. The discharged steam is condensed by the cooling water in the suppression chamber 107 and the pressure in the dry well 110 is reduced.

When the steam continues to be discharged into the reactor containment vessel 109 from the reactor pressure vessel 100, however, the pressure inside the reactor containment vessel 109 is increased, so eventually, a vent in which gas in the reactor containment vessel 109 is discharged to outside of the reactor containment vessel 109 is needed to reduce the internal pressure of the reactor containment vessel 109. A system connected to a stack is used for this vent. Such a series of steam discharges brings along hydrogen into the reactor containment vessel 109, and this hydrogen may induce a hydrogen explosion.

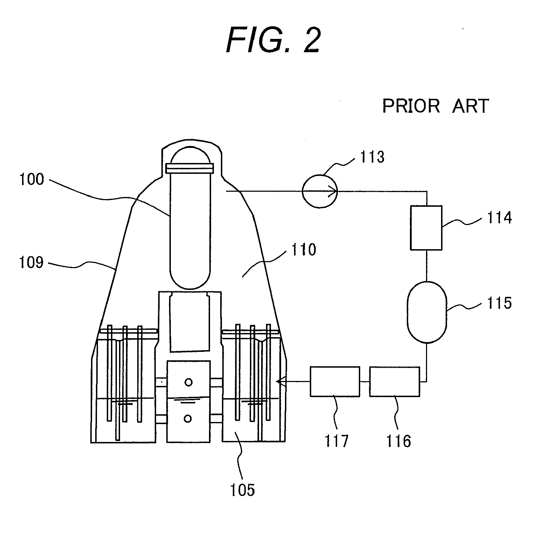

Even when the external power source is lost in the severe accident, if the emergency power source can be activated, the hydrogen can be safely treated by a flammable gas control system shown in FIG. 2. That is, the hydrogen in the reactor containment vessel 109 can be sent to a heater 114 using a blower 113; then, when passing a recombiner 115, the hydrogen reacts with oxygen by a catalyst to become steam, which reduces the hydrogen concentration. The generated steam is condensed in a cooler 116, passes through a separator 117, and returns to the suppression pool 105.

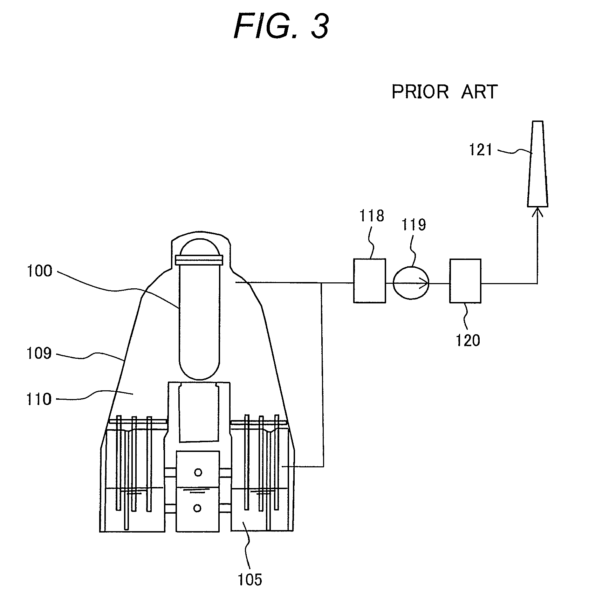

Furthermore, as shown in FIG. 3, if the emergency power source is available, a standby gas treatment system can be used to safely discharge the gas inside the reactor containment vessel 109 from a stack 121 through a dryer 118, a fan 119, and a filter 120.

Japanese Patent Laid-open No. 2011-58895, for example, states equipment for controlling the concentration of flammable gas.

### [Citation List]

### [Patent Literature]

[Patent Literature 1] Japanese Patent Laid-open No. 2011-58895

### SUMMARY OF THE INVENTION

### [Technical Problem]

If an accident causing station black-out occurs in a nuclear power plant by disaster exceeding all expectations, dynamic functions provided as safety facilities for the reactor will be lost. As a result, the above-mentioned system for treating hydrogen becomes unusable, so that even hydrogen will be discharged through the vent for reducing the internal pressure of the reactor containment vessel. In this case, the hydrogen should flow through the standby gas treatment system connected to the stack; however, there is a concern of a hydrogen leak into the reactor building in such a severe accident as one causing station black-out.

Thus, if there is some kind of ignition source in the reactor building and a hydrogen explosion is set off, not only the function of cooling reactor but also the function of trapping radioactive materials in the reactor building may be lost.

From the above reason, a nuclear power plant is necessary to be provided with a technology for reducing the possibility of hydrogen explosion in the reactor building during station black-out.

It is an object of the present invention to provide a nuclear power plant and a method of operating it for safely treating hydrogen to prevent a hydrogen explosion and damage to a reactor building and for trapping radioactive materials in the reactor building when hydrogen generated in the reactor pressure vessel leaks into the reactor building due to station black-out.

### [Solution to Problem]

A feature of the present invention for accomplishing the above object is a nuclear power plant having a reactor pressure vessel; a reactor containment vessel for storing the reactor pressure vessel and covered with a reactor building; hydrogen treatment facilities for treating hydrogen without using a power source and disposed in the reactor building; a control apparatus operated by an independent power source activated at the time of station black-out; a hydrogen detection apparatus connected to the control apparatus; a hydrogen treatment duct put in use by the control apparatus when hydrogen concentration detected by the hydrogen detection apparatus exceeds a set concentration; and/or a circulation passage for generating air circulation in the reactor building by putting the hydrogen treatment duct in use, to make the circulation pass through the hydrogen treatment facilities.

In addition, in order to achieve the above object, a feature of the present invention is a method of operating a nuclear power plant comprising a reactor pressure vessel; a reactor containment vessel for storing the reactor pressure vessel and covered with a reactor building; hydrogen treatment facilities for treating hydrogen without using a power source and disposed in the reactor building; a control apparatus operated by an independent power source activated at the time of station black-out; a hydrogen detection apparatus connected to the control apparatus; a hydrogen treatment duct put in use by the control apparatus when hydrogen concentration detected by the hydrogen detection apparatus exceeds a set concentration; and/or a circulation passage for generating air circulation in the reactor building by putting the hydrogen treatment duct in use, to make the circulation pass through the hydrogen treatment facilities, the method comprising steps of:
detecting hydrogen by the hydrogen detection apparatus;
opening the hydrogen treatment duct by the control apparatus when the hydrogen concentration detected by the hydrogen detection apparatus exceeds the set concentration; and/or
introducing the hydrogen into the hydrogen treatment facilities through the hydrogen treatment duct and the circulation passage.

### [Advantageous Effect of the Invention]

According to the present invention, even when station black-out occurs, causing hydrogen generated in the reactor pressure vessel to leak into the reactor building, the hydrogen can be safely treated to prevent a hydrogen explosion and damage to the reactor building, allowing radioactive materials to be kept trapped in the reactor building, thus it is very effective for a nuclear power plant.

### BRIEF DESCRIPTION OF THE DRAWINGS

FIG. 1 is a structural view showing a structure of a conventional nuclear power plant.
FIG. 2 is a structural view showing an example of a conventional flammable gas control system applied to a conventional nuclear power plant shown in FIG. 1.
FIG. 3 is a structural view showing an example of a conventional standby gas treatment system applied to a conventional nuclear power plant shown in FIG. 1.
FIG. 4 is a structural view showing a structure of a nuclear power plant according to embodiment 1, which is a preferred embodiment of the present invention.
FIG. 5 is a perspective view showing a hydrogen recombiner shown in FIG. 4.
FIG. 6 is an explanatory drawing showing a method for operating a hydrogen treating system used in a nuclear power plant shown in FIG. 1.
FIG. 7 is a structural view showing a structure of a nuclear power plant according to embodiment 2, which is another embodiment of the present invention.

### DETAILED DESCRIPTION OF THE PREFERRED EMBODIMENTS

Embodiments on a nuclear power plant and a method of operating it of the present invention will be described below with reference to figures. The same numerals are used for the same components as those in the conventional nuclear power plant shown in FIG. 1.

### [Embodiment 1]

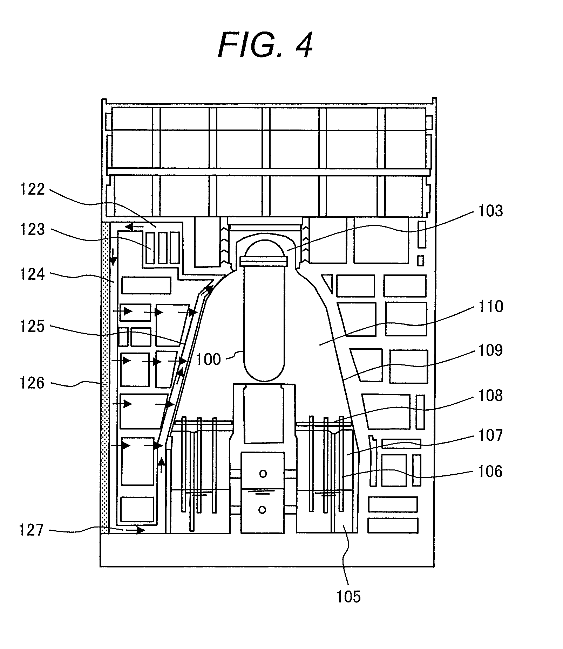

FIG. 4 shows a nuclear power plant in the present embodiment. In the present embodiment, only a portion being different from the conventional nuclear power plant shown in FIG. 1 will be described here. Although the equipment hatch 104, the spent fuel pool 101, the steam dryer/separator pit 111, etc. shown in FIG. 1 are not shown in FIG. 4, a nuclear power plant of the present embodiment has the equipment hatch 104, the spent fuel pool 101, the steam dryer/separator pit 111, etc..

In embodiment 1 shown in FIG. 4, a hydrogen treatment room 122 is formed outside the reactor containment vessel 109 and in the upper portion of the reactor building of a nuclear power plant. A plurality of hydrogen recombiners 123 are installed in the hydrogen treatment room 122.

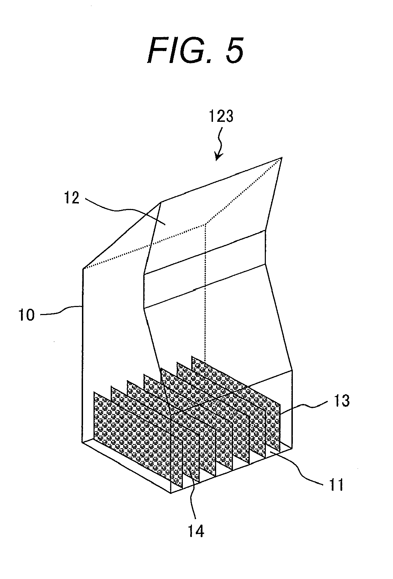

Each hydrogen recombiner 123 is a hydrogen recombiner having catalyst metal. The hydrogen recombiner 123 has a casing 10, and a plurality of catalyst cartridges 13 including oxygen-hydrogen catalyst containing one or more platinum group elements (for example, platinum) inside, as shown in FIG. 5. A gas inlet 11 is formed at a lower end of the casing 10 and a gas outlet 12 is formed at an upper end portion of one side wall of the casing 10. The plurality of flat-shaped catalyst cartridges 13 are disposed at a lower portion in the casing 10 and in parallel each other. A plurality of gas passages 14 divided by the plurality of catalyst cartridges 13 are formed in the casing 10 between the catalyst cartridges 13. Each gas passage 14 is communicated with the gas inlet 11 and the gas outlet 12. A space formed in the casing 10 and between an upper end of each catalyst cartridge 13 and the gas outlet 12 functions as a chimney.

A downcomer pipe 124 is installed on an inner surface of one side wall, that is, a heat removal wall 126 of the reactor building. One surface of this downcomer pipe 124 is in contact with an inner surface of a heat removal wall 126 of the reactor building. An upper end portion of the downcomer pipe 124 is connected to the hydrogen treatment room 122. A riser pipe 125 is installed on an outer surface of reactor containment vessel 109. The riser pipe 125 has one surface in contact with the outer surface of a steel plate of the reactor containment vessel 109. An upper end portion of the riser pipe 125 is also connected to the hydrogen treatment room 122. Each lower end portion of the downcomer pipe 124 and riser pipe 125 is connected to a horizon pipe 127 installed on a bottom of the reactor building. A hydrogen treatment system is provided with the hydrogen treatment room 122, the hydrogen recombiner 123, the downcomer pipe 124, the riser pipe 125 and the horizon pipe 127.

When the severe accident and the station black-out occurred, air containing hydrogen and oxygen flows in from an inlet of the hydrogen treatment room 122 through the riser pipe 125 as being described later. The air containing the hydrogen and oxygen flow into each gas passage 14 formed in the hydrogen recombiner 123 through the gas inlet 11 of the casing 10. In the hydrogen recombiner 123, the hydrogen and oxygen in the air start to react by action of the oxygen-hydrogen catalyst, and thus, the hydrogen in the air is consumed and hydrogen concentration in the air is reduced. The air increases its temperature due to heat generated by the react of the hydrogen and oxygen. The air whose temperature is risen is discharged into the chimney formed in the casing 10 from each gas passage 14 and outside the hydrogen recombiner 123 through the gas outlet 12. By the action of the chimney, and rise of the air temperature in the hydrogen recombiner 123, the amount of inflow of the air containing the hydrogen and oxygen into the hydrogen recombiner 123 from the hydrogen treatment room 122 is increased. The hydrogen recombiner 123 can treat the hydrogen without using a power source in the reactor building.

The air in which the hydrogen concentration was reduced in the hydrogen recombiner 123 is discharged into the hydrogen treatment room 122 from the hydrogen recombiner 123, and flows into the downcomer pipe 124. The air descended in the downcomer pipe 124 is cooled by the heat removal wall 126, reduces its temperature down to about atmospheric temperature, and increases its density. Thus, the air whose density increase flows down in the downcomer pipe 124. The air flowed down to the bottom of the reactor building moves in the horizon pipe 127 and flows into the riser pipe 125.

When for example, the severe accident occurred, the temperature of the steel plate of the reactor containment vessel 109 increases and consequently, the air flowed into the riser pipe 125 starts to be heated by the heat of the reactor containment vessel 109. The air decreased in density by the increase of the temperature starts to ascend in the riser pipe 125 and further moves to the upper portion of the reactor building in the outside of the reactor containment vessel 109. Since the upper portion of the reactor containment vessel 109 has a higher temperature, the air continues to ascend in the riser pipe 125 and to flows into the hydrogen treatment room 122.

The above circulation of air is repeatedly generated and becomes a large circulation of air, establishing a system for stably treating hydrogen.

Accordingly, according to the present embodiment, the hydrogen can be safely treated to prevent a hydrogen explosion in the occurrence of station black-out causing the hydrogen generated in the reactor pressure vessel 100 to leak into the reactor building. As a consequence, not only damage to the reactor building can be prevented but also radioactive materials trapped in the reactor building can be kept.

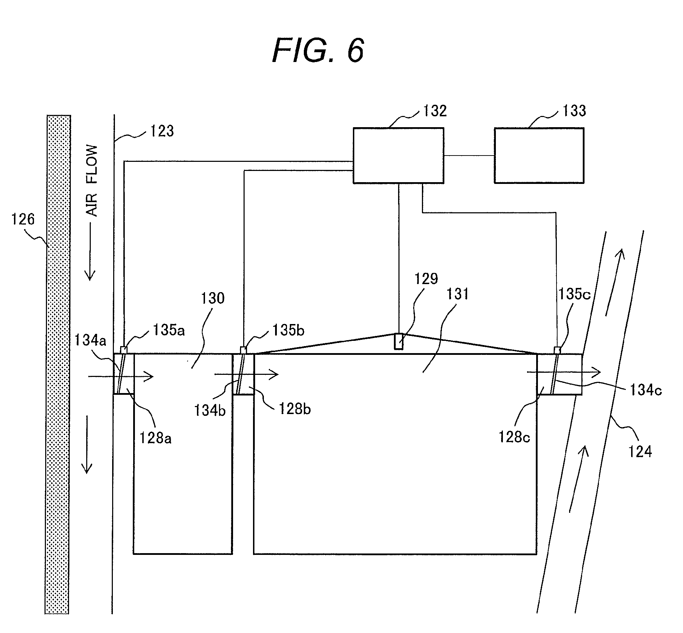

Next, the method for operating the hydrogen treatment system in the present embodiment will be described with reference to FIG. 6.

Usually, radioactivity concentration in a gangway 130 on each floor and rooms provided with a variety of equipment (collectively referred to as an equipment room 131 here) in the reactor building is adjusted by a heating, ventilating, and air-conditioning system (not shown). At the time of station black-out, this system does not function.

Thus, in the present embodiment, the gangway 130 and the equipment room 131 are provided with a hydrogen detector 129, the downcomer pipe 123 is communicated with the gangway 130 through a hydrogen treatment duct 128a, the gangway 130 is communicated with the equipment room 131 through a hydrogen treatment duct 128b, and the equipment room 131 is communicated with the riser pipe 124 through a hydrogen treatment duct 128c. A flat panel 134a is disposed on the skew in the hydrogen treatment duct 128a and locked by a clamp mechanism 135a attached to the hydrogen treatment duct 128a. A flat panel 134b is disposed on the skew in the hydrogen treatment duct 128b and locked by a clamp mechanism 135b attached to the hydrogen treatment duct 128b. A flat panel 134c is disposed on the skew in the hydrogen treatment duct 128c and locked by a clamp mechanism 135c attached to the hydrogen treatment duct 128c. When the nuclear power plant is operated, the flat panel 134a locked by a clamp mechanism 135a blockades the hydrogen treatment duct 128a, the flat panel 134b locked by a clamp mechanism 135b blockades the hydrogen treatment duct 128b, and the flat panel 134c locked by a clamp mechanism 135c blockades the hydrogen treatment duct 128c.

It is assumed that the severe accident and the station black-out occurred. When the station black-out occurred, the external power source and the emergency power source are cut off. Power is supplied to the hydrogen detectors 129 and a control apparatus 132 from an independent power source (for example, a battery) 133 activated when the external power source and the emergency power source (for example, a diesel generator) is cut off.

The hydrogen detector 129 disposed in the gangway 130 detects the hydrogen leaked from the reactor containment vessel 109 into the gangway 130. The hydrogen detector 129 disposed in the equipment room 131 detects the hydrogen leaked from the reactor containment vessel 109 into the equipment room 131. Each hydrogen detector 129 outputs hydrogen detection signal. The hydrogen detection signal outputted from the hydrogen detector 129 is inputted to the control apparatus 132. When the hydrogen concentration detected by the hydrogen detector 129 exceeds a set value, the clamp mechanism 135a, 135b and 135c are controlled by the control apparatus 132, so that each lock of the flat panels 134a, 134b and 134c is released. Since the flat panels 134a, 134b and 134c whose lock were released fall in each hydrogen treatment duct, the downcomer pipe 123 and gangway 130 are communicated through the hydrogen treatment duct 128a, the gangway 130 and equipment room 131 are communicated through the hydrogen treatment duct 128b, and the equipment room 131 and riser pipe 124 are communicated through the hydrogen treatment duct 128c. Therefore, the hydrogen leaked in the gangway 130 or the equipment room 131 on each floor is introduced into the hydrogen treatment room 122 through the hydrogen treatment duct and the riser pipe 125. The hydrogen introduced into the hydrogen treatment room 122 is treated by the hydrogen recombiners 123 disposed in the hydrogen treatment room 122, as above-mentioned. In this way, the damage to the reactor building by a hydrogen explosion can be prevented during station black-out.

The hydrogen detector 129 is installed in the upper end portion (the vicinity of a ceiling) of the gangway 130 and the equipment room 131. When hydrogen rapidly flows in, it will be collected in the upper end portion at first since it is lighter than air. Thus, in the present embodiment, each ceiling of the gangway 130 and the equipment room 131 have a conical or a pyramid shape, and the hydrogen detector 129 is disposed in the top portion of the gangway 130 and the equipment room 131, respectively.

A set value of the hydrogen concentration is set to a value sufficiently lower than the hydrogen flammability limit, for example, around 500 ppm. When a hydrogen concentration exceeds the set value, the hydrogen treatment ducts 128a, 128b, and 128c are promptly opened as have been described. The hydrogen leaked in the gangway 130 or the equipment room 131 is mixed with the sufficient amount of air in the gangway 130 and the equipment room 131. The air containing the hydrogen is introduced into the hydrogen treatment room 122.

If, at the time other than a severe accident causing station black-out, the gangway 130 and the equipment room 131 are communicated or the system including the hydrogen treatment room 122, the downcomer pipe 123, the horizon pipe 127, and the riser pipe 125 is allowed to work, leaked radioactive materials, for example, may be circulated to even a wider range to spread contamination. Thus, the hydrogen treatment ducts 128a, 128b and 128c are opened only when the possibility is increased for a hydrogen explosion which could seriously affect the integrity of the reactor building, otherwise the hydrogen treatment ducts 128a, 128b and 128c are normally closed by the flat panels 134a, 134b and 134c during operation of the nuclear power plant.

### [Embodiment 2]

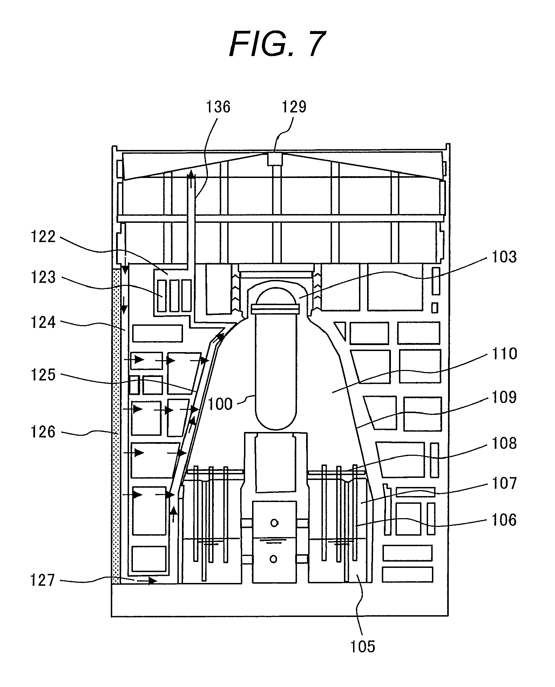

A nuclear power plant according to embodiment 2, which is another embodiment of the present invention, will be described with reference to FIG. 7. The nuclear power plant of the present embodiment also has the equipment hatch 104, the spent fuel pool 101, the steam dryer/separator pit 111, etc. shown in FIG. 1.

In the present embodiment shown in FIG. 7, the hydrogen treatment room 122 is formed outside the reactor containment vessel 109 and in the upper portion of the reactor building of a nuclear power plant. A plurality of hydrogen recombiners 123 are installed in the hydrogen treatment room 122. In the present embodiment, an air discharge pipe 136 connected to a top portion of the hydrogen treatment room 122 is extended toward a ceiling of the reactor building. An outlet of the air discharge pipe 136 is disposed in the vicinity of the ceiling of the reactor building. An inlet of the downcomer pipe 124 is communicated with an upper region in the reactor building. The other structure of the nuclear power plant of the present embodiment is the same as that of the nuclear power plant of the embodiment 1.

In this case, the hydrogen detector 129 is installed to the top portion in the upper space of the reactor building except the gangway 130 and the equipment room 131. For example, when a hydrogen leak occurs or the concentration of hydrogen released from the spent fuel pool 101 is increased, the hydrogen concentration detected by the hydrogen detector 129 disposed in the top portion of the reactor building also increases. When this hydrogen concentration exceeds the above set value, the clamp mechanism 135a, 135b and 135c are controlled by the control apparatus 132 as with the embodiment 1, and the flat panels 134a, 134b and 134c fall in each hydrogen treatment duct. Thus, the downcomer pipe 123 and the riser pipe 124 are communicated through the hydrogen treatment duct 128a, the gangway 130, the hydrogen treatment duct 128b, and the equipment room 131 and the hydrogen treatment duct 128c.

The circulation passage for air is now formed so that the air containing hydrogen in the upper end portion of the reactor building flows in the downcomer pipe 124. The air containing hydrogen flowed in the downcomer pipe 124 flows in the hydrogen treatment room 122 through the hydrogen treatment duct 128a, the gangway 130, the hydrogen treatment duct 128b, and the equipment room 131, the hydrogen treatment duct 128c and the riser pipe 124. At this time, in the hydrogen recombiner 123 disposed in the hydrogen treatment room 122, the hydrogen and the oxygen in the air start to react by action of the oxygen-hydrogen catalyst, and hydrogen concentration in the air discharged into the hydrogen treatment room 122 from the hydrogen recombiner 123 is reduced as with the embodiment 1. The air increased in temperature in the hydrogen recombiner 123 flows out from the exit of the hydrogen treatment room 122 and discharged to a space near the ceiling in the upper portion of the reactor building. This stirs the hydrogen and air and promotes mixing in the upper portion of the reactor building.

The space in the upper portion of the reactor building has an increased hydrogen concentration, thus the hydrogen in this space needs to be treated. The air containing the hydrogen in the space flows into the downcomer pipe 124. One surface of the downcomer pipe 124 is in contact with the heat removal wall 126 so that the air flowed in is cooled by the heat removal wall 126 to reduce its temperature down to about atmospheric temperature, and since its density is increased, it flows down the downcomer pipe 124. The air flowed down to the bottom of the reactor building moves in the horizon pipe 127 and flows into the riser pipe 125. The riser pipe 125 has a surface in contact with a steel plate of the reactor containment vessel 109 so that the air flowed into the riser pipe 125 starts to be heated by the reactor containment vessel 109 having an increased temperature by the occurrence of the accident. The air decreased in density starts to ascend in the riser pipe 125 and moves to the upper portion of the reactor building in the outside of the reactor containment vessel 109. Since the upper portion of the reactor containment vessel 109 has a higher temperature, the air continues to ascend in the riser pipe 125 and to flow into the hydrogen treatment room 122.

The above air flow is repeatedly generated to create a large circulation of air so that a system for stably treating hydrogen in a wide range including the space in the upper portion of the lower end of the reactor building is established.

Thus, the embodiment 2 can obtain the same effect generated in the embodiment 1.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

### [REFERENCE SIGNS LIST]

10 : casing, 13 : catalyst cartridge, 14 : gas passage, 100 : reactor pressure vessel, 101 : spent fuel pool, 102 : top flange, 103 : reactor well, 104 : equipment hatch, 105 : suppression pool, 106 : vent tube, 107 : suppression chamber, 108 : diaphragm floor, 109 : reactor containment vessel, 110 : dry well, 111 : steam dryer/separator pit, 112 : crane, 113 : blower, 114 : heater, 115 : recombiner, 116 : cooler, 117 : separator, 118 : dryer, 119 : fan, 120 : filter, 121 : stack, 122 : hydrogen treatment room, 123 : hydrogen recombiner, 124 : downcomer pipe, 125 : riser pipe, 126 : heat removal wall, 127 : horizon pipe,128a, 128b, 128c : hydrogen treatment duct, 129 : hydrogen detector, 130 : gangway, 131 : equipment room, 132 : control apparatus, 133 : power source, 134a, 134b, 134c : flat panel, 135a, 135b, 135c : clamp mechanism.

## Claims

1. A nuclear power plant comprising:
a reactor pressure vessel (100);
a reactor containment vessel (109) for storing the reactor pressure vessel (100) and covered with a reactor building;
hydrogen treatment facilities for treating hydrogen without using a power source and disposed in the reactor building;
a control apparatus operated by an independent power source activated at the time of station black-out;
a hydrogen detection apparatus connected to the control apparatus;
a hydrogen treatment duct (128 a, b, c) put in use by the control apparatus when hydrogen concentration detected by the hydrogen detection apparatus exceeds a set concentration; and
a circulation passage for generating air circulation in the reactor building by putting the hydrogen treatment duct (128 a, b, c) in use, to make the circulation pass through the hydrogen treatment facilities.

2. The nuclear power plant according to claim 1, wherein the hydrogen treatment facilities has a hydrogen treatment room (122) disposed outside the reactor containment vessel (109) and an upper portion of the reactor building, and a hydrogen treatment apparatus having an oxygen-hydrogen catalyst inside and disposed in the hydrogen treatment room (122).

3. The nuclear power plant according to claim 1, wherein the circulation passage is provided with a downcomer pipe (124) for passing air discharged from the hydrogen treatment facilities, and installed on an inner surface of a side wall of the reactor building; a horizon pipe (127) for passing the air flowed down the downcomer pipe (124) to the bottom of the reactor building; and a riser pipe (125) contacting the reactor containment vessel for passing the air flowed in from the horizon pipe (127) and heated by the reactor containment vessel (109), and introducing the air into the hydrogen treatment facilities.

4. The nuclear power plant according to claim 3, wherein the downcomer pipe (124) and a gangway (130) on each floor of the reactor building, the gangway and a room disposing an equipment, and the room and the riser pipe (125) are each connected with the hydrogen treatment duct (128c); the hydrogen detection apparatus is installed in the isle or the room; and the hydrogen treatment duct (128 a, b, c) is opened by the control apparatus when the hydrogen concentration detected by the hydrogen detection apparatus is installed in the isle or the room exceeds the set concentration.

5. The nuclear power plant according to claim 4, wherein the hydrogen detection apparatus and the hydrogen treatment duct (128 a, b, c) are controlled by the control apparatus supplied with power by an independent power source activated when external power source and emergency power source are cut off.

6. The nuclear power plant according to claim 4, wherein a top portion of at least one of the gangway (130), the room and a ceiling of the reactor building is made in a conical or a pyramid shape; and the hydrogen detection apparatus is installed in the top portion.

7. The nuclear power plant according to any one of claims 1 to 6,
wherein one portion of the circulation passage come in contact with an inner surface of a side wall of the reactor building for heat removal; and another portion of the circulation passage come in contact with an outer surface of the reactor containment vessel for heating.

8. A method of operating a nuclear power plant comprising a reactor pressure vessel (100); a reactor containment vessel (109) for storing the reactor pressure vessel (100) and covered with a reactor building; hydrogen treatment facilities for treating hydrogen without using a power source and disposed in the reactor building; a control apparatus operated by an independent power source activated at the time of station black-out; a hydrogen detection apparatus connected to the control apparatus; a hydrogen treatment duct (128 a, b, c) put in use by the control apparatus when hydrogen concentration detected by the hydrogen detection apparatus exceeds a set concentration; and a circulation passage for generating air circulation in the reactor building by putting the hydrogen treatment duct (128 a, b, c) in use, to make the circulation pass through the hydrogen treatment facilities, the method comprising steps of:
detecting hydrogen by the hydrogen detection apparatus;
opening the hydrogen treatment duct (128 a, b, c) by the control apparatus when the hydrogen concentration detected by the hydrogen detection apparatus exceeds the set concentration; and
introducing the hydrogen into the hydrogen treatment facilities through the hydrogen treatment duct (128 a, b, c) and the circulation passage.

9. The operating method of a nuclear power plant according to claim 8,
wherein the air flowed out from the hydrogen treatment facilities flows into a downcomer pipe (124), which is a first part of the circulation passage, installed on an inner surface of a side wall of the reactor building; the air flowed down in the downcomer pipe (124) to a bottom of the reactor building moves in a horizon pipe (127) which is a second part of the circulation passage; the air flowed in from the horizon pipe flows into a riser pipe (125) which is a third part of the circulation passage and comes contact with an outer surface of the reactor containment vessel (109); and the air is introduced into the hydrogen treatment facilities through the riser pipe (125).
